# FASCICULE DE BREVET EUROPEEN

(11) **EP 3 827 571 B1**
(45) Date de publication et mention de la délivrance du brevet: **06.07.2022**
(21) Numéro de dépôt: 19795247.6
(22) Date de dépôt: 24.06.2019
(51) Int. Cl.: H04L 9/40, H04K 3/00, G06F 21/57

(54) **PROCÉDÉ DE DÉTECTION D'AU MOINS UN ÉQUIPEMENT INFORMATIQUE COMPROMIS AU SEIN D'UN SYSTÈME D'INFORMATION**
VERFAHREN ZUR DETEKTION VON MINDESTENS EINER BEEINTRÄCHTIGTEN RECHNERVORRICHTUNG IN EINEM INFORMATIONSSYSTEM
METHOD FOR DETECTING AT LEAST ONE COMPROMISED COMPUTER DEVICE IN AN INFORMATION SYSTEM

(30) Priorité: 26.07.2018 FR 1800804
(43) Date de publication de la demande: 02.06.2021
(73) Titulaire: État Français représenté par le Délégué Général pour l'Armement, 75509 Paris Cedex 15 (FR)
(72) Inventeur: MALLIER, Sébastien, 35890 Bourg des Comptes (FR); NOGUES Erwan, 35000 Rennes (FR); DANDOIS Thierry, 35170 Bruz (FR); BIGOT, Daniel, 35580 Guichen (FR)
(74) Mandataire: Cabinet Chaillot
(86) Numéro de dépôt international: PCT/FR2019/000103
(87) Numéro de publication internationale: WO 2020/021166

(56) Documents cités:
- EP-A1- 1 120 920
- US-A1- 2003 083 831
- US-A1- 2004 208 239

## Description

La présente invention concerne le domaine de la sécurité des systèmes d'information, et porte en particulier sur un procédé de détection d'au moins un équipement informatique compromis au sein d'un système d'information.

Tout matériel ou système, qui traite ou transmet des informations sous forme électrique, produit des perturbations électromagnétiques. Ces perturbations, qualifiées de signaux parasites, sont provoquées par les variations du régime électrique établi dans les différents circuits qui composent le matériel considéré durant son fonctionnement. Certains de ces parasites peuvent être représentatifs des informations traitées. Leur interception et leur exploitation peuvent permettre de reconstituer les informations.

Un système d'information est l'ensemble organisé de ressources (matériels, logiciels, personnel, données, etc.) permettant de traiter, stocker, ou transmettre de l'information au travers d'un support électronique.

Des signaux parasites compromettants sont les signaux parasites (non intentionnels) représentatifs des informations traitées par un système d'information qui, une fois interceptés et exploités, permettent d'en reconstituer tout ou partie du contenu. La présence de signaux parasites compromettants peut, par exemple, être due à une absence de blindage sur la connectique des ordinateurs du système d'information.

Les signaux parasites compromettants peuvent être captés à des distances pouvant atteindre quelques dizaines de mètres pour les parasites rayonnés. En outre, des captures de signaux parasites compromettants peuvent être réalisées sur de très longues distances en cas de couplage fortuit avec des émetteurs radioélectriques.

De nombreux produits directement équipés d'émetteurs (radio, infrarouge...) sont disponibles dans le commerce, de telle sorte que la puissance et les caractéristiques connues des signaux transmis par ceux-ci peuvent faciliter l'interception des informations transmises. Ainsi, l'augmentation de l'utilisation des périphériques et de technologies de communication sans fil induit de nouvelles menaces qu'il convient de prendre en compte pour assurer la confidentialité, l'intégrité, l'authenticité et la disponibilité des informations traitées.

Une technique existante d'analyse de signaux parasites compromettants consiste à analyser de manière séquentielle l'ensemble des équipements informatiques d'un système d'information (c'est-à-dire, un équipement informatique à la fois). Cependant, cette technique existante est non-automatique en raison du fait qu'un opérateur doit analyser chaque équipement informatique successivement, ce qui entraîne une durée d'analyse relativement longue. Dans cette technique existante, une analyse auditive de chaque équipement informatique est réalisée à partir de signaux de test maîtrisés. Ceci signifie qu'une analyse à bande étroite doit être réalisée afin de mesurer un rapport signal sur bruit élevé, ce qui entraîne un temps d'analyse relativement élevé et proportionnelle à la bande fréquentielle analysée.

De plus, cette technique existante ne permet pas de discriminer automatiquement deux équipements informatiques du système d'information émettant des signaux parasites compromettants dont les fréquences sont voisines.

En outre, cette technique existante ne permet pas non plus de réaliser une qualification de compromission sans reconstitution. En effet, celle-ci ne propose qu'une reconstitution complète des signaux parasites compromettants pour qualifier le défaut, ce qui nécessite la connaissance précise des paramètres complets du système d'information.

En résumé, la technique existante d'analyse de signaux parasites compromettants est réalisée de manière non-automatique (analyse très dépendante de l'expertise de l'opérateur), et unitaire/lente (analyse d'un seul équipement informatique à la fois).

Le document US 2003/083831 A1 (AGRAWAL DAKSHI [US] ET AL) 1 mai 2003 (2003-05-01) fait partie de l'état de l'art pertinent.

La présente invention vise à résoudre les inconvénients de l'état antérieur de la technique, en proposant un procédé de détection d'au moins un équipement informatique compromis au sein d'un système d'information comprenant au moins un équipement informatique, qui permet d'analyser simultanément et automatiquement l'ensemble des équipements informatiques du système d'information de manière à réduire sensiblement le temps d'analyse.

L'objectif de la détection d'équipement informatique compromis est de vérifier que l'information traitée par le système d'information (par exemple constitué de plusieurs équipements informatiques) ne puisse pas être interceptée par une tierce personne, de manière fortuite (liée à un équipement informatique compromis) ou volontaire (liée à un piégeage).

La présente invention a donc pour objet un procédé de détection d'au moins un équipement informatique compromis au sein d'un système d'information comprenant au moins un équipement informatique, caractérisé par le fait que le procédé comprend les étapes consistant à :
a) effectuer un balayage fréquentiel consistant à découper le spectre électromagnétique en sous-bandes fréquentielles ;
b) dans chaque sous-bande fréquentielle, effectuer une démodulation d'enveloppe temporelle pour récupérer des signaux émis par l'au moins un équipement informatique du système d'information ;
c) transformer chaque signal démodulé dans le domaine fréquentiel ;
d) construire un spectre fréquentiel à partir des signaux démodulés dans l'ensemble des sous-bandes fréquentielles ;
e) rechercher séquentiellement, dans chaque sous-bande fréquentielle du spectre fréquentiel, au moins une raie ayant une énergie supérieure à un premier seuil d'énergie prédéfini ; et
f) si au moins une raie ayant une énergie supérieure au premier seuil d'énergie prédéfini est trouvée dans au moins une sous-bande fréquentielle, signaler la présence d'au moins un équipement informatique compromis, dans le système d'information, émettant des signaux parasites compromettants.

Par « équipement informatique », on entend un équipement parmi un ordinateur de bureau, un ordinateur portable, une tablette, un téléphone intelligent, une imprimante, un périphérique informatique, un élément de connectique, un écran de contrôle par exemple de type écran de radar ou afficheur de carte, un traceur de cartes, un téléphone chiffrant.

Ainsi, le procédé selon la présente invention permet de déterminer précisément et rapidement si un ou plusieurs équipements informatiques constituant le système d'information (SI) génèrent des fuites d'information (c'est-à-dire, des signaux parasites compromettants) par analyse du spectre fréquentiel des signaux parasites émis par l'au moins un équipement informatique du système d'information.

La détection des signaux parasites compromettants (SPC) vise à détecter des fréquences de fuite des SPC (par exemple, fréquence de fuite de l'information associée à un dispositif d'affichage vidéo), ladite détection étant réalisée, lorsque tous les équipements informatiques sont activés, en parallèle (et non en séquentiel), ce qui permet de gagner considérablement en temps d'analyse.

Les signaux parasites émis par les équipements informatiques du système d'information sont captés à l'aide d'une antenne et d'un récepteur radio (par exemple, boitier de radio logicielle, et l'analyse des signaux reçus est réalisée à l'aide d'un moyen de calcul tel qu'au moins l'un parmi un microprocesseur, un microcontrôleur, un processeur, un composant logique programmable, une carte graphique, associé à de la mémoire, apte à mettre en œuvre des instructions logicielles d'algorithmes de traitement de signal.

Cette solution est automatique (aucune intervention humaine durant le processus de détection), parallèle/rapide (analyse de plusieurs équipements informatiques à la fois), et sans prélèvement physique de signaux sur les équipements informatiques, l'analyse peut donc être effectuée à distance par exemple lorsque le système d'information n'est pas accessible.

La compromission d'un équipement informatique du système d'information peut, par exemple, être due à un défaut lié à une absence de blindage sur la connectique de l'équipement informatique compromis.

Chaque sous-bande fréquentielle du spectre électromagnétique correspond potentiellement à un canal caché.

La démodulation d'enveloppe temporelle est très robuste car non sensible aux dérives fréquentielles étant donné que seule l'enveloppe des signaux est récupérée.

La transformation des signaux démodulés dans le domaine fréquentiel est réalisée à l'aide d'un algorithme de transformée de Fourrier rapide (FFT). D'autres algorithmes, tels que des corrélateurs ou intégrateurs cohérents temporels, pourraient également être envisagés dans le cadre de la présente invention.

La détection, dans au moins une sous-bande fréquentielle, d'au moins une raie dont l'énergie est supérieure au premier seuil d'énergie prédéfini permet ainsi de détecter au moins un équipement informatique compromis dans le système d'information.

Par « équipement informatique compromis », on entend un équipement informatique qui fait fuiter de l'information de manière fortuite, par exemple à cause d'une absence de blindage sur sa connectique.

Le premier seuil d'énergie prédéfini est préréglé par l'utilisateur et peut, par exemple, être égal à deux fois l'énergie du bruit de réception.

Selon une caractéristique particulière de l'invention, le procédé comprend en outre, entre l'étape c) et l'étape d), l'étape c1) consistant à améliorer le rapport signal sur bruit par intégrations successives des signaux démodulés.

Ainsi, les intégrations successives permettent de réaliser un moyennage des signaux démodulés de manière à améliorer le rapport signal sur bruit.

Selon une caractéristique particulière de l'invention, le procédé, mis en œuvre au sein d'un système d'information comprenant plusieurs équipements informatiques, chacun équipé d'un dispositif d'affichage, comprend en outre, avant l'étape a), l'étape consistant à envoyer, à chaque équipement informatique du système d'information, un signal d'affichage de fréquence spécifique à l'équipement informatique correspondant, chaque signal d'affichage ayant un rapport de fréquences connu par rapport à une fréquence de référence, et, après l'étape f), l'étape g) consistant à rechercher séquentiellement, dans chaque sous-bande fréquentielle du spectre fréquentiel, au moins une paire de raies ayant un rapport de fréquences correspondant à l'un des rapports de fréquences connus et dont l'une des raies est l'une de l'au moins une raie d'énergie supérieure au premier seuil d'énergie prédéfini dans la sous-bande fréquentielle correspondante, et, lorsque l'autre des raies de l'au moins une paire de raies dépasse un second seuil d'énergie prédéfini, signaler que l'équipement informatique correspondant audit rapport de fréquences est compromis.

Ainsi, dans cette caractéristique particulière de l'invention, le procédé permet de déterminer précisément et rapidement, parmi les nombreux équipements informatiques constituant le système d'information, la liste des équipements informatiques compromis qui génèrent des fuites d'information (c'est-à-dire, des signaux parasites compromettants).

Dans cette caractéristique particulière de l'invention, le procédé permet d'identifier le ou les équipements informatiques compromis dans le SI, via une analyse en parallèle (et non en séquentiel), ce qui permet de gagner considérablement en temps d'analyse. Par exemple, pour un SI composé de 30 ordinateurs, un facteur de 30 peut être gagné par rapport à la méthode classique grâce à l'identification en parallèle des équipements informatiques compromis.

L'identification du ou des équipements informatiques compromis est possible grâce à l'affichage de signaux d'affichage sur chaque dispositif d'affichage des équipements informatiques. Ces signaux d'affichage ont pour but de générer des SPC à des fréquences maîtrisées et correspondant chacune à un dispositif d'affichage particulier du SI, ce qui permet son identification. Ainsi, la technique de détection/identification en parallèle de SPC proposée comprend la recherche de signaux présents à des fréquences qui « signent » les équipements informatiques compromis qui font fuir de l'information.

Dans chaque sous-bande fréquentielle, une recherche simultanée de deux raies sur le signal démodulé après transformation dans le domaine fréquentiel est réalisée. L'originalité repose ici sur la recherche aveugle de la fréquence associée à la raie dont l'amplitude est la plus élevée (et supérieure au premier seuil d'énergie prédéfini). On suppose alors qu'il s'agit de la raie correspondant à la fréquence de référence d'un signal d'affichage. Puis, on vérifie si une seconde raie (dont l'amplitude est supérieure au second seuil d'énergie prédéfini) est présente à un rapport de fréquences caractérisant l'un des signaux d'affichage utilisés, on suppose alors qu'il s'agit de la raie correspondant à la fréquence spécifique de l'un des signaux d'affichage affichés sur les dispositifs d'affichage des équipements informatiques, ce qui permet d'identifier précisément l'équipement informatique compromis correspondant au rapport de fréquences détecté.

Le second seuil d'énergie prédéfini est préréglé par l'utilisateur et peut, par exemple, être égal à deux fois l'énergie du bruit de réception. Il est à noter que les premier et second seuils d'énergie prédéfinis peuvent être identiques.

Selon une caractéristique particulière de l'invention, chaque signal d'affichage est une mire destinée à être affichée sur le dispositif d'affichage de l'équipement informatique correspondant, ladite mire comprenant un motif dont la fréquence est un multiple ou sous-multiple de la fréquence de référence constituée par une fréquence de synchronisation associée à ladite mire, le rapport de fréquences entre la fréquence du motif et la fréquence de synchronisation étant connu et spécifique à l'équipement informatique correspondant.

Compte tenu du nombre important d'équipements informatiques composant un SI, une bibliothèque de mires, dont le nombre d'éléments est égal au minimum au nombre d'équipements informatiques sous test, est construite. Pour ce faire, la répétitivité d'un motif stationnaire apparaissant à une fréquence et une amplitude élevées est utilisée pour créer les différentes mires affichées sur les dispositifs d'affichage du SI.

La définition, pour chaque mire, de la fréquence de synchronisation et de la fréquence du motif de mire permet d'obtenir un rapport de fréquences spécifique pour chaque équipement informatique du SI.

Selon une caractéristique particulière de l'invention, la fréquence de référence est constituée par la fréquence de synchronisation ligne du dispositif d'affichage de l'équipement informatique.

La construction des mires se fait à l'aide d'un moyen algorithmique qui utilise la répétition de motifs (par exemple, des lignes blanches ou noires) avec des paramètres différents pour chaque dispositif d'affichage, ce moyen algorithmique ayant pour but de générer un signal radio compromettant temporel à une dimension à partir d'une image à deux dimensions.

Ces mires sont ensuite affichées sur les dispositifs d'affichage afin de détecter et d'identifier, en parallèle et de manière automatique, des équipements informatiques compromis qui font fuiter de l'information.

Les propriétés physiques des mires « signantes » sont utilisées pour les détecter et pour créer une association entre la compromission (c'est-à-dire, mire) détectée et l'équipement informatique qui lui est associé.

Selon une caractéristique particulière de l'invention, lesdits rapports de fréquences de l'ensemble des mires pourraient également être des nombres premiers entre eux.

Selon une caractéristique particulière de l'invention, le procédé comprend en outre, après l'étape f) ou, le cas échéant, après l'étape g), une étape de quantification de compromission consistant à calculer, dans chaque sous-bande fréquentielle, le rapport signal sur bruit de ladite ou desdites raies dépassant le premier seuil d'énergie prédéfini ou, le cas échéant, le second seuil d'énergie prédéfini.

Ainsi, la quantification du degré de compromission, c'est-à-dire le niveau et la portée des SPC, via une analyse en parallèle, permet de savoir si le risque de fuite d'information est important ou non.

La quantification de la compromission, par calcul du rapport signal sur bruit, permet de donner une information fiable sur le degré de compromission.

Selon une caractéristique particulière de l'invention, le procédé comprend en outre, après l'étape f) ou, le cas échéant, après l'étape g), une étape de qualification de compromission consistant à calculer, dans chaque sous-bande fréquentielle, l'étalement fréquentiel de ladite ou desdites raies dépassant le premier seuil d'énergie prédéfini ou, le cas échéant, le second seuil d'énergie prédéfini, et à déterminer, dans chaque sous-bande fréquentielle, en fonction de la largeur de l'étalement fréquentiel calculé, si les signaux parasites compromettants associés à ladite ou auxdites raies dépassant le premier seuil d'énergie prédéfini ou, le cas échéant, le second seuil d'énergie prédéfini peuvent ou non être reconstitués.

Ainsi, la qualification du degré de compromission, c'est-à-dire la capacité à reconstruire les SPC sans passer par une étape de reconstruction, via une analyse en parallèle, permet de savoir si le risque de fuite d'information est avéré ou non et ce sans connaître les paramètres de l'information qui a fuitée.

Les éventuels signaux parasites compromettants sont ainsi évalués grâce à deux indicateurs distincts liés à l'information détectée :
- indicateur de quantification : cet indicateur permet d'optimiser les coûts engendrés par les contre-mesures face aux SPC (par exemple, installation de cage(s) de Faraday, utilisation de peinture métallisée) ;
- indicateur de qualification : cet indicateur permet de déterminer le type d'information qui peut être compromise (par exemple, petits ou grands caractères d'un document texte) sans la reconstitution complète du signal.

Les étapes de quantification/qualification reposent principalement sur l'exploitation des résultats du processus de détection. En effet, il existe une corrélation entre les résultats de mesure de la largeur de bande détectée et la capacité à reconstruire des SPC. A titre d'exemple, si la bande détectée est égale à 10 MHz alors que les SPC ont une largeur de bande de 20 MHz, la reconstitution est mauvaise. A l'inverse, si la bande détectée est égale à 30 MHz alors que les SPC ont une largeur de bande de 20 MHz, la reconstitution sera bonne. Il est à noter que, dans ce dernier cas, ce critère ne nécessite pas l'utilisation d'un outil de reconstitution qui est un outil complexe à mettre en place et dont les résultats peuvent engendrer des non-détections.

Selon une caractéristique particulière de l'invention, le procédé comprend en outre, après l'étape f) ou, le cas échéant, après l'étape g), l'étape consistant à afficher, sur une interface utilisateur, les résultats de signalement d'équipement informatique compromis comprenant la ou les raies dépassant le premier seuil d'énergie prédéfini ou, le cas échéant, le second seuil d'énergie prédéfini dans chaque sous-bande fréquentielle, et le cas échéant les résultats de quantification et de qualification de compromission.

L'affichage des résultats est réalisé sous une forme intelligible et adaptée à des utilisateurs non-experts du domaine.

Par exemple, pour chaque fréquence balayée (de 10 MHz à 1 GHZ) du spectre fréquentiel, une barre verticale d'une première couleur peut représenter l'énergie associée au motif de synchronisation ligne d'un dispositif d'affichage et une barre verticale d'une seconde couleur peut représenter l'énergie associée à la mire qui a été détectée. La détection de SPC est symbolisée par la présence effective des barres verticales de première et seconde couleurs (représentant les raies détectées), ces barres signifiant que les énergies des motifs de synchronisation ligne et des mires détectés ont respectivement dépassé les premier et second seuils d'énergie prédéfinis.

Il est à noter que l'affichage des résultats pourrait également prendre une quelconque autre forme, sans s'écarter du cadre de la présente invention.

Pour faciliter la lecture des résultats, un zoom fréquentiel peut être réalisé sur les zones de détection de raies. L'identification du ou des équipements informatiques compromis consiste simplement à relier les résultats de détection à l'indice de mire associée, le nom ou le numéro de chaque équipement informatique compromis étant ensuite affiché. Le résultat affiché de quantification de la compromission est lié à la mesure de la hauteur des barres verticales représentant les raies détectées. Le résultat affiché de qualification de la compromission est lié à la mesure de l'étalement fréquentiel des barres verticales représentant les raies détectées.

La présente invention a également pour objet un système d'information comprenant au moins un équipement informatique, caractérisé par le fait que le système d'information comprend en outre un dispositif d'analyse de signaux comprenant une antenne de réception et un moyen de calcul configurés pour réaliser le procédé de détection d'au moins un équipement informatique compromis tel que décrit ci-dessus.

Pour mieux illustrer l'objet de la présente invention, on va en décrire ci-après, à titre illustratif et non limitatif, deux modes de réalisation préférés, avec référence aux dessins annexés.

Sur ces dessins :
- la Figure 1 est un schéma de principe d'un système d'information selon un premier mode de réalisation de l'invention ;
- la Figure 2 est un schéma de principe d'un système d'information selon un second mode de réalisation de l'invention ;
- la Figure 3 est un organigramme illustrant le procédé de détection selon le second mode de réalisation de l'invention ;
- la Figure 4 est un graphique à titre d'exemple illustrant le spectre fréquentiel de signaux parasites reçus dans l'une des sous-bandes fréquentielles ; et
- la Figure 5 est un graphique illustrant un affichage à titre d'exemple de résultats de détection de SPC dans le spectre fréquentiel.

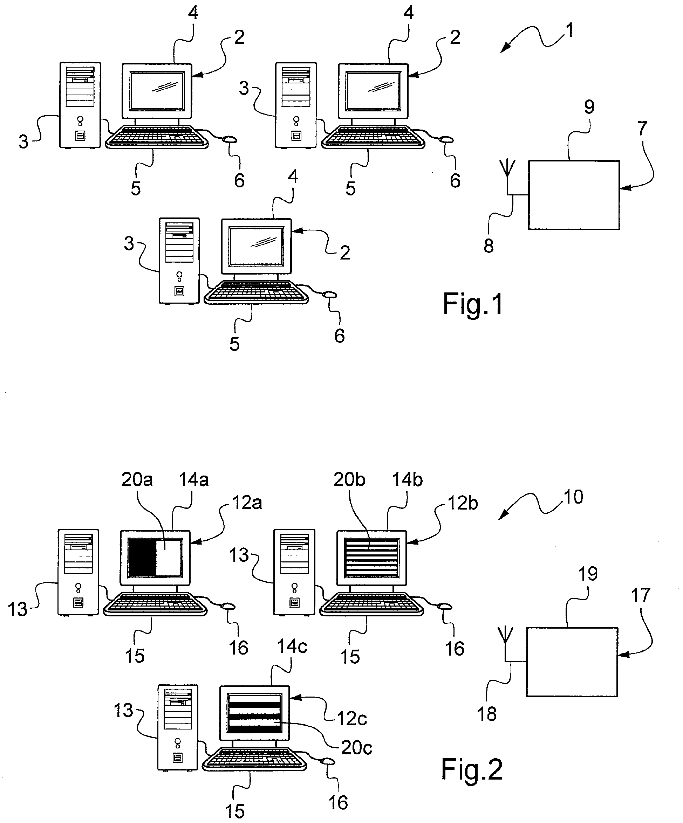

Si l'on se réfère à la Figure 1, on peut voir qu'il y est représenté un système d'information 1 selon un premier mode de réalisation de l'invention.

Le système d'information 1 comprend trois équipements informatiques 2.

Il est à noter que le système d'information 1 pourrait également comprendre un nombre quelconque d'équipements informatiques 2, sans s'écarter du cadre de la présente invention.

Chaque équipement informatique 2 comprend un ordinateur de bureau 3 auquel sont reliés un dispositif d'affichage 4 de type écran, un clavier 5 et une souris 6.

Il est à noter que chaque équipement informatique 2 pourrait également être un quelconque équipement parmi un ordinateur portable, une tablette, un téléphone intelligent, une imprimante, un périphérique informatique, une connectique, un écran de contrôle de type écran de radar ou afficheur de carte, un traceur de cartes, un téléphone chiffrant, sans s'écarter du cadre de la présente invention.

Un ou plusieurs des équipements informatiques 2 du système d'information 1 peuvent être compromis (c'est-à-dire, peuvent faire fuiter de l'information de manière fortuite, par exemple en raison d'une absence de blindage sur la connectique de l'équipement informatique 2 compromis).

Le système d'information 1 comprend en outre un dispositif d'analyse de signaux 7 comprenant une antenne de réception 8 et un moyen de calcul 9 configurés pour réaliser un procédé de détection d'au moins un équipement informatique 2 compromis au sein du système d'information 1 comprenant les étapes consistant à :
a) effectuer un balayage fréquentiel consistant à découper le spectre électromagnétique en sous-bandes fréquentielles, chaque sous-bande fréquentielle correspondant à un canal caché ;
b) dans chaque sous-bande fréquentielle, effectuer une démodulation d'enveloppe temporelle pour récupérer des signaux parasites émis par les équipements informatiques 2 et reçus par l'antenne de réception 8 du dispositif d'analyse de signaux 7 ;
c) transformer chaque signal démodulé dans le domaine fréquentiel à l'aide du moyen de calcul 9 du dispositif d'analyse de signaux 7, de préférence en utilisant un algorithme de transformée de Fourrier rapide (FFT) ; et c1) facultativement, améliorer le rapport signal sur bruit par intégrations successives des signaux démodulés à l'aide du moyen de calcul 9 ;
d) construire un spectre fréquentiel à partir des signaux démodulés dans l'ensemble des sous-bandes fréquentielles à l'aide du moyen de calcul 9 ;
e) rechercher séquentiellement, dans chaque sous-bande fréquentielle du spectre fréquentiel, au moins une raie ayant une énergie supérieure à un premier seuil d'énergie prédéfini à l'aide du moyen de calcul 9 ; et
f) si au moins une raie ayant une énergie supérieure au premier seuil d'énergie prédéfini est trouvée dans au moins une sous-bande fréquentielle, signaler la présence d'au moins un équipement informatique 2 compromis, dans le système d'information 1, émettant des signaux parasites compromettants, à l'aide du moyen de calcul 9.

Le moyen de calcul 9 est au moins l'un parmi un microprocesseur, un microcontrôleur, un processeur, un composant logique programmable, une carte graphique, associé à de la mémoire, apte à mettre en œuvre des instructions logicielles d'algorithmes de traitement de signal.

Le dispositif d'analyse de signaux 7 permet de déterminer précisément et rapidement si un ou plusieurs équipements informatiques 2 constituant le système d'information 1 génèrent des fuites d'information (c'est-à-dire, des signaux parasites compromettants) par analyse du spectre fréquentiel des signaux parasites émis par l'ensemble des équipements informatiques 2 du système d'information 1.

La détection des signaux parasites compromettants (SPC) est réalisée, lorsque tous les équipements informatiques 2 sont activés, en parallèle (et non en séquentiel), ce qui permet de gagner considérablement en temps d'analyse.

Le premier seuil d'énergie prédéfini est préréglé par l'utilisateur et peut, par exemple, être égal à deux fois l'énergie du bruit de réception.

Si l'on se réfère à la Figure 2, on peut voir qu'il y est représenté un système d'information 10 selon un second mode de réalisation de l'invention.

Les éléments communs entre le premier mode de réalisation de l'invention sur la Figure 1 et ce second mode de réalisation de l'invention portent le même chiffre de référence auquel on a ajouté 10, sauf pour le système d'information référencé 10, et ne seront pas décrits plus en détail ici lorsqu'ils sont de structures identiques.

Le système d'information 10 comprend trois équipements informatiques 12a, 12b et 12c, chaque équipement informatique 12a, 12b, 12c comprenant un dispositif d'affichage de type écran 14a, 14b, 14c, respectivement.

Chacun des dispositifs d'affichage 14a, 14b, 14c des équipements informatiques 12a, 12b, 12c affiche un signal d'affichage de fréquence spécifique à l'équipement informatique 12a, 12b, 12c correspondant.

Chaque signal d'affichage est une mire affichée sur le dispositif d'affichage 14a, 14b, 14c de l'équipement informatique 12a, 12b, 12c correspondant.

Chaque mire comprend un motif (comprenant des lignes blanches et noires) dont la fréquence est un multiple ou sous-multiple de la fréquence de synchronisation ligne du dispositif d'affichage 14a, 14b, 14c correspondant.

Pour chaque mire, le rapport de fréquences entre la fréquence du motif de mire et la fréquence de synchronisation ligne est connu et spécifique à l'équipement informatique 12a, 12b, 12c correspondant.

Dans le cas particulier de la Figure 2, le dispositif d'affichage 14a de l'équipement informatique 12a affiche une mire 20a dont la fréquence de motif est égale à 2 fois la fréquence de synchronisation ligne, le dispositif d'affichage 14b de l'équipement informatique 12b affiche une mire 20b dont la fréquence de motif est égale à ½ fois la fréquence de synchronisation ligne, et le dispositif d'affichage 14c de l'équipement informatique 12c affiche une mire 20c dont la fréquence de motif est égale à ¼ de fois la fréquence de synchronisation ligne.

Les mires 20a, 20b, 20c ont pour but de générer des signaux parasites lorsque les équipements informatiques 12a, 12b, 12c sont compromis et font fuiter de l'information, chaque mire 20a, 20b, 20c ayant un rapport de fréquences connu et correspondant à un dispositif d'affichage 14a, 14b, 14c particulier du système d'information 10, ce qui permet l'identification des équipements informatiques 12a, 12b, 12c défaillants.

Il est à noter que les rapports de fréquences de l'ensemble des mires 20a, 20b, 20c pourraient également être des nombres premiers entre eux, sans s'écarter du cadre de la présente invention.

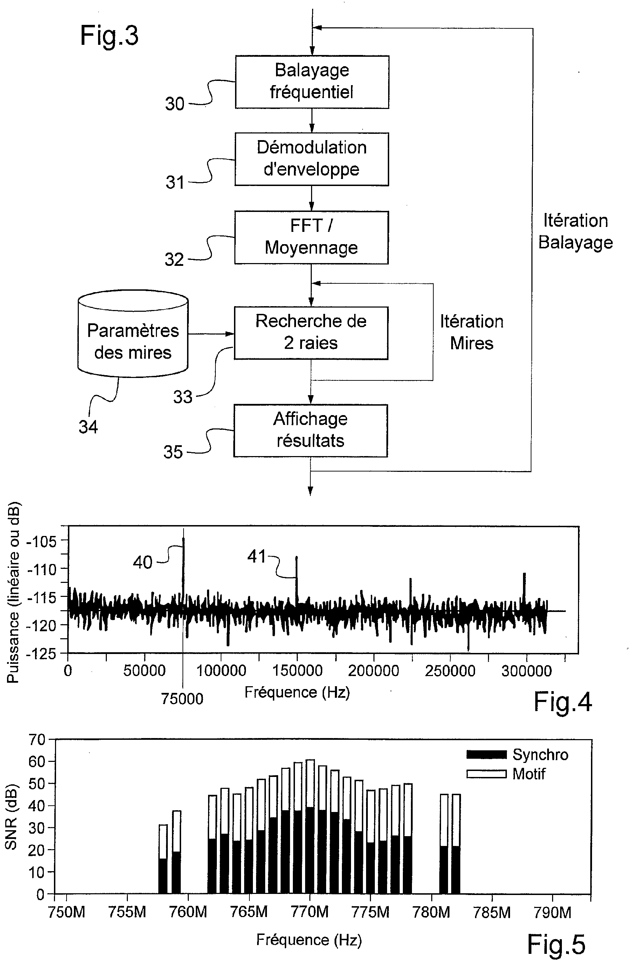

Si l'on se réfère à la Figure 3, on peut voir qu'il y est représenté un organigramme illustrant le procédé de détection d'équipement informatique 12a, 12b, 12c compromis selon le second mode de réalisation de l'invention mis en œuvre par le dispositif d'analyse de signaux 17.

Ledit procédé de détection d'équipement informatique 12a, 12b, 12c compromis mis en œuvre par le dispositif d'analyse de signaux 17 comprend les étapes suivantes :
- effectuer 30 un balayage fréquentiel consistant à découper le spectre électromagnétique en sous-bandes fréquentielles, chaque sous-bande fréquentielle correspondant à un canal caché ;
- dans chaque sous-bande fréquentielle, effectuer 31 une démodulation d'enveloppe temporelle pour récupérer des signaux parasites émis par les équipements informatiques 12a, 12b, 12c et reçus par l'antenne de réception 18 du dispositif d'analyse de signaux 17 ;
- transformer 32 chaque signal démodulé dans le domaine fréquentiel à l'aide du moyen de calcul 19 du dispositif d'analyse de signaux 17, en utilisant un algorithme de transformée de Fourrier rapide (FFT), et améliorer le rapport signal sur bruit par intégrations successives (moyennage) des signaux démodulés à l'aide du moyen de calcul 19 ;

- construire un spectre fréquentiel à partir des signaux démodulés dans l'ensemble des sous-bandes fréquentielles à l'aide du moyen de calcul 19 ;
- rechercher 33 séquentiellement, à l'aide du moyen de calcul 19, dans chaque sous-bande fréquentielle du spectre fréquentiel, au moins une paire de raies ayant un rapport de fréquences correspondant à l'un des rapports de fréquences connus 34 des mires 20a, 20b, 20c et dont l'une des raies a une énergie supérieure au premier seuil d'énergie prédéfini, et, lorsque l'autre des raies de l'au moins une paire de raies dépasse un second seuil d'énergie prédéfini, signaler que l'équipement informatique 12a, 12b, 12c correspondant audit rapport de fréquences est compromis ; et
- afficher 35 les résultats de recherche de raies et de signalement sur une interface utilisateur.

Le second seuil d'énergie prédéfini est préréglé par l'utilisateur et peut, par exemple, être égal à 1.5 fois l'énergie du bruit de réception. Il est à noter que les premier et second seuils d'énergie prédéfinis peuvent être identiques.

Ainsi, le dispositif d'analyse de signaux 17 permet de déterminer précisément et rapidement, via une analyse en parallèle (et non en séquentiel), parmi les équipements informatiques 12a, 12b, 12c constituant le système d'information 10, la liste des équipements informatiques 12a, 12b, 12c compromis qui génèrent des fuites d'information (c'est-à-dire, des signaux parasites compromettants).

Lors de l'étape de recherche de raies 33, une recherche aveugle de la fréquence associée à la raie dont l'amplitude est la plus élevée (et supérieure au premier seuil d'énergie prédéfini) est réalisée. Il est alors supposé qu'il s'agit de la raie correspondant à la fréquence de synchronisation ligne d'une mire 20a, 20b, 20c. Ensuite, il est vérifié si une seconde raie (dont l'amplitude est supérieure au second seuil d'énergie prédéfini) est présente à un rapport de fréquences caractérisant l'une des mires 20a, 20b, 20c utilisées. Il est alors supposé qu'il s'agit de la raie correspondant à la fréquence de motif spécifique de l'une des mires 20a, 20b, 20c affichées sur les dispositifs d'affichage 14a, 14b, 14c des équipements informatiques 12a, 12b, 12c, ce qui permet d'identifier précisément l'équipement informatique 12a, 12b, 12c compromis correspondant au rapport de fréquences détecté.

Le procédé pourrait également comprendre, entre l'étape de recherche 33 et l'étape d'affichage 35, une étape de quantification de compromission consistant à calculer, dans chaque sous-bande fréquentielle, le rapport signal sur bruit des raies détectées dépassant les premier et second seuils d'énergie prédéfinis.

Le procédé pourrait également comprendre, entre l'étape de recherche 33 et l'étape d'affichage 35, une étape de qualification de compromission consistant à calculer, dans chaque sous-bande fréquentielle, l'étalement fréquentiel des raies détectées dépassant les premier et second seuils d'énergie prédéfinis, et à déterminer, dans chaque sous-bande fréquentielle, en fonction de la largeur de l'étalement fréquentiel calculé, si les signaux parasites compromettants associés auxdites raies dépassant les premier et second seuils d'énergie prédéfinis peuvent ou non être reconstitués.

La qualification du degré de compromission, c'est-à-dire la capacité à reconstruire les signaux parasites compromettants sans passer par une étape de reconstruction, permet de savoir si le risque de fuite d'information est avéré ou non et ce sans connaître les paramètres de l'information qui a fuitée.

Les éventuels signaux parasites compromettants sont ainsi évalués grâce à deux indicateurs distincts liés à l'information détectée :
- indicateur de quantification : cet indicateur permet d'optimiser les coûts engendrés par les contre-mesures face aux SPC (par exemple, installation de cage(s) de Faraday, utilisation de peinture métallisée) ;
- indicateur de qualification : cet indicateur permet de déterminer le type d'information qui peut être compromise (par exemple, petits ou grands caractères d'un document texte) sans la reconstitution complète du signal.

Si l'on se réfère à la Figure 4, on peut voir qu'il y est représenté un graphique à titre d'exemple illustrant le spectre fréquentiel d'un signal parasite démodulé reçu dans l'une des sous-bandes fréquentielles.

Dans ce graphique à titre d'exemple, la paire de raies ayant les puissances les plus élevées, à savoir la première raie 40 à une fréquence de 75 kHz et la seconde raie 41 à une fréquence de 150 kHz, sont deux raies dont le rapport de fréquences correspond à un rapport de fréquences connu de l'une des mires affichées.

En particulier, la seconde raie 41 correspond à la fréquence de synchronisation ligne affichée correspondante, et la première raie 40 correspond à la fréquence de la mire affichée correspondante.

En pratique, la raie ayant la puissance la plus élevée, à savoir la première raie 40, a tout d'abord été considérée comme étant la raie correspondant à la fréquence de synchronisation ligne, mais aucune raie supplémentaire correspondant à l'un des rapports de fréquences connus n'ayant été trouvée, la seconde raie 41 a alors ensuite été considérée comme étant la raie correspondant à la fréquence de synchronisation ligne, puis il a été trouvé que la première raie 40 correspondait, avec la seconde raie 41, à un rapport de fréquences connu de mire, de telle sorte que la première raie 40 fût considérée comme étant la raie correspondant à la fréquence de la mire.

Si l'on se réfère à la Figure 5, on peut voir qu'il y est représenté un graphique illustrant un affichage à titre d'exemple de résultats de détection de signaux parasites compromettants dans le spectre fréquentiel.

L'affichage des résultats est réalisé sous une forme intelligible et adaptée à des utilisateurs non-experts du domaine.

Pour chaque fréquence balayée du spectre fréquentiel, une barre verticale de couleur noire représente le rapport signal sur bruit (SNR) en dB associé à la fréquence de synchronisation ligne d'un dispositif d'affichage et une barre verticale de couleur blanche (superposée sur la barre verticale de couleur noire de même fréquence) représente le SNR associé à la fréquence de motif de la mire qui a été détectée. La détection de signaux parasites compromettants est symbolisée par la présence effective des barres verticales noires et blanches (représentant les raies détectées), ces barres signifiant que les énergies des fréquences de synchronisation ligne et de motif de mire détectées ont dépassé respectivement les premier et second seuils d'énergie prédéfinis.

Il est à noter que l'affichage des résultats pourrait également prendre une quelconque autre forme, sans s'écarter du cadre de la présente invention.

Pour faciliter la lecture des résultats, un zoom fréquentiel peut être réalisé sur les zones de détection de raies (dans le cas particulier de la Figure 5, de 750 à 790 MHz). L'identification du ou des équipements informatiques 12a, 12b, 12c compromis consiste simplement à relier les résultats de détection à l'indice de mire associée.

Le nom ou le numéro de chaque équipement informatique 12a, 12b, 12c compromis détecté pourrait également être affiché.

Le résultat de quantification de compromission pourrait également être affiché, celui-ci étant lié à la mesure de la hauteur des barres verticales représentant les raies détectées.

Le résultat de qualification de compromission pourrait également être affiché, celui-ci étant lié à la mesure de l'étalement fréquentiel des barres verticales représentant les raies détectées.

## Revendications

1. - Procédé de détection d'au moins un équipement informatique (2 ; 12a, 12b, 12c) compromis au sein d'un système d'information (1 ; 10) comprenant au moins un équipement informatique (2 ; 12a, 12b, 12c), le procédé comprenant les étapes consistant à :
a) effectuer (30) un balayage fréquentiel consistant à découper le spectre électromagnétique en sous-bandes fréquentielles ;
b) dans chaque sous-bande fréquentielle, effectuer (31) une démodulation d'enveloppe temporelle pour récupérer des signaux émis par l'au moins un équipement informatique (2 ; 12a, 12b, 12c) du système d'information (1 ; 10) ;
c) transformer (32) chaque signal démodulé dans le domaine fréquentiel ;
d) construire un spectre fréquentiel à partir des signaux démodulés dans l'ensemble des sous-bandes fréquentielles ;
le procédé étant caractérisé en qu'il comprend en outre les étapes consistant à:
e) rechercher (33) séquentiellement, dans chaque sous-bande fréquentielle du spectre fréquentiel, au moins une raie ayant une énergie supérieure à un premier seuil d'énergie prédéfini ;
f) si au moins une raie ayant une énergie supérieure au premier seuil d'énergie prédéfini est trouvée dans au moins une sous-bande fréquentielle, signaler la présence d'au moins un équipement informatique (2 ; 12a, 12b, 12c) compromis, dans le système d'information (1 ; 10), émettant des signaux parasites compromettants.

2. - Procédé selon la revendication 1, **caractérisé par le fait qu'**il comprend en outre, entre l'étape c) et l'étape d), l'étape c1) consistant à améliorer le rapport signal sur bruit par intégrations successives des signaux démodulés.

3. - Procédé selon la revendication 1 ou la revendication 2, mis en œuvre au sein d'un système d'information (10) comprenant plusieurs équipements informatiques (12a, 12b, 12c), chacun équipé d'un dispositif d'affichage (14a, 14b, 14c), **caractérisé par le fait que** le procédé comprend en outre, avant l'étape a), l'étape consistant à envoyer, à chaque équipement informatique (12a, 12b, 12c) du système d'information (10), un signal d'affichage de fréquence spécifique à l'équipement informatique (12a, 12b, 12c) correspondant, chaque signal d'affichage ayant un rapport de fréquences connu par rapport à une fréquence de référence, et, après l'étape f), l'étape g) consistant à rechercher (33) séquentiellement, dans chaque sous-bande fréquentielle du spectre fréquentiel, au moins une paire de raies ayant un rapport de fréquences correspondant à l'un des rapports de fréquences connus et dont l'une des raies est l'une de l'au moins une raie d'énergie supérieure au premier seuil d'énergie prédéfini dans la sous-bande fréquentielle correspondante, et, lorsque l'autre des raies de l'au moins une paire de raies dépasse un second seuil d'énergie prédéfini, signaler que l'équipement informatique (12a, 12b, 12c) correspondant audit rapport de fréquences est compromis.

4. - Procédé selon la revendication 3, **caractérisé par le fait que** chaque signal d'affichage est une mire (20a, 20b, 20c) destinée à être affichée sur le dispositif d'affichage (14a, 14b, 14c) de l'équipement informatique (12a, 12b, 12c) correspondant, ladite mire (20a, 20b, 20c) comprenant un motif dont la fréquence est un multiple ou sous-multiple de la fréquence de référence constituée par une fréquence de synchronisation associée à ladite mire (20a, 20b, 20c), le rapport de fréquences entre la fréquence du motif et la fréquence de synchronisation étant connu et spécifique à l'équipement informatique (12a, 12b, 12c) correspondant.

5. - Procédé selon la revendication 4, **caractérisé par le fait que** la fréquence de référence est constituée par la fréquence de synchronisation ligne du dispositif d'affichage (14a, 14b, 14c) de l'équipement informatique (12a, 12b, 12c).

6. - Procédé selon la revendication 4 ou la revendication 5, **caractérisé par le fait que** lesdits rapports de fréquences de l'ensemble des mires sont des nombres premiers entre eux.

7. - Procédé selon l'une des revendications 1 à 6, **caractérisé par le fait que** le procédé comprend en outre, après l'étape f) ou, le cas échéant, après l'étape g), une étape de quantification de compromission consistant à calculer, dans chaque sous-bande fréquentielle, le rapport signal sur bruit de ladite ou desdites raies dépassant le premier seuil d'énergie prédéfini ou, le cas échéant, le second seuil d'énergie prédéfini.

8. - Procédé selon l'une des revendications 1 à 7, **caractérisé par le fait que** le procédé comprend en outre, après l'étape f) ou, le cas échéant, après l'étape g), une étape de qualification de compromission consistant à calculer, dans chaque sous-bande fréquentielle, l'étalement fréquentiel de ladite ou desdites raies dépassant le premier seuil d'énergie prédéfini ou, le cas échéant, le second seuil d'énergie prédéfini, et à déterminer, dans chaque sous-bande fréquentielle, en fonction de la largeur de l'étalement fréquentiel calculé, si les signaux parasites compromettants associés à ladite ou auxdites raies dépassant le premier seuil d'énergie prédéfini ou, le cas échéant, le second seuil d'énergie prédéfini peuvent ou non être reconstitués.

9. - Procédé selon l'une des revendications 1 à 8, **caractérisé par le fait que** le procédé comprend en outre, après l'étape f) ou, le cas échéant, après l'étape g), l'étape consistant à afficher (35), sur une interface utilisateur, les résultats de signalement d'équipement informatique (2 ; 12a, 12b, 12c) compromis comprenant la ou les raies dépassant le premier seuil d'énergie prédéfini ou, le cas échéant, le second seuil d'énergie prédéfini dans chaque sous-bande fréquentielle, et le cas échéant les résultats de quantification et de qualification de compromission.

10. - Système d'information (1 ; 10) comprenant au moins un équipement informatique (2 ; 12a, 12b, 12c), et en outre un dispositif d'analyse de signaux (7 ; 17) comprenant une antenne de réception (8 ; 18) et un moyen de calcul (9 ; 19) configurés pour réaliser le procédé de détection d'au moins un équipement informatique (2 ; 12a, 12b, 12c) compromis selon l'une des revendications 1 à 9.

## Patentansprüche

1. - Verfahren zur Detektion von mindestens einer beeinträchtigten Informatikeinrichtung (2; 12a, 12b, 12c) innerhalb eines Informationssystems (1; 10), das mindestens eine Informatikeinrichtung (2; 12a, 12b, 12c) umfasst, wobei das Verfahren die Schritte umfasst, die darin bestehen:
a) Durchführen (30) einer Frequenzabtastung, die darin besteht, das elektromagnetische Spektrum in Unter-Frequenzbänder zu unterteilen;
b) Durchführen (31) einer zeitlichen Hüllkurven-Demodulation in jedem Unter-Frequenzband, um von der mindestens einen Informatikeinrichtung (2; 12a, 12b, 12c) des Informationssystems (1; 10) gesendete Signale wiederherzustellen;
c) Umwandeln (32) jedes demodulierten Signals im Frequenzbereich;
d) Konstruieren eines Frequenzspektrums ausgehend von den demodulierten Signalen in der Gesamtheit der Unter-Frequenzbänder;
wobei das Verfahren **dadurch gekennzeichnet ist, dass** es ferner die Schritte umfasst, die darin bestehen:
e) sequentielles Ermitteln (33) mindestens einer Linie mit einer Energie über einem vorher festgelegten ersten Energiegrenzwert in jedem Unter-Frequenzband des Frequenzspektrums,;
f) wenn mindestens eine Linie mit einer Energie über dem vorher festgelegten ersten Energiegrenzwert in mindestens einem Unter-Frequenzband gefunden wird, Mitteilen des Vorhandenseins von mindestens einer beeinträchtigten Informatikeinrichtung (2; 12a, 12b, 12c) im Informationssystem (1; 10), die beeinträchtigende Störsignale sendet.

2. - Verfahren nach Anspruch 1, **dadurch gekennzeichnet, dass** es ferner zwischen dem Schritt c) und dem Schritt d) den Schritt c1) umfasst, der darin besteht, das Signal-Rausch-Verhältnis durch aufeinanderfolgende Integrationen der demodulierten Signale zu verbessern.

3. - Verfahren nach Anspruch 1 oder Anspruch 2, das innerhalb eines Informationssystems (10) durchgeführt wird, das mehrere Informatikeinrichtungen (12a, 12b, 12c) umfasst, die jeweils mit einer Anzeigevorrichtung (14a, 14b, 14c) ausgestattet sind, **dadurch gekennzeichnet, dass** das Verfahren ferner vor dem Schritt a) den Schritt umfasst, der darin besteht, an jede Informatikeinrichtung (12a, 12b, 12c) des Informationssystems (10) ein Anzeigesignal mit einer für die entsprechende Informatikeinrichtung (12a, 12b, 12c) spezifischen Frequenz zu senden, wobei jedes Anzeigesignal ein in Bezug auf ein Referenzfrequenz bekanntes Frequenzverhältnis hat, und nach dem Schritt f) der Schritt g) darin besteht, in jedem Unter-Frequenzband des Frequenzspektrums sequentiell mindestens ein Linienpaar mit einem Frequenzverhältnis zu ermitteln (33), das einem der bekannten Frequenzverhältnisse entspricht und von dem eine der Linien eine der mindestens einen Energielinie ist, die über dem im entsprechenden Unter-Frequenzband vorher festgelegten ersten Energiegrenzwert liegt und, wenn die andere der Linien des mindestens einen Linienpaars einen vorher festgelegten zweiten Energiegrenzwert überschreitet, mitzuteilen, dass die dem Frequenzverhältnis entsprechende Informatikeinrichtung (12a, 12b, 12c) beeinträchtigt ist.

4. - Verfahren nach Anspruch 3, **dadurch gekennzeichnet, dass** jedes Anzeigesignal ein Testbild (20a, 20b, 20c) ist, das bestimmt ist, auf der Anzeigevorrichtung (14a, 14b, 14c) der entsprechenden Informatikeinrichtung (12a, 12b, 12c) angezeigt zu werden, wobei das Testbild (20a, 20b, 20c) ein Motiv umfasst, dessen Frequenz ein Vielfaches oder Unter-Vielfaches der Referenzfrequenz ist, die aus eine Synchronisationsfrequenz besteht, die dem Testbild (20a, 20b, 20c) zugeordnet ist, wobei das Frequenzverhältnis zwischen der Frequenz des Motivs und der Synchronisationsfrequenz bekannt und für die entsprechende Informatikeinrichtung (12a, 12b, 12c) spezifisch ist.

5. - Verfahren nach Anspruch 4, **dadurch gekennzeichnet, dass** die Referenzfrequenz aus der Zeilensynchronisationsfrequenz der Anzeigevorrichtung (14a, 14b, 14c) der Informatikeinrichtung (12a, 12b, 12c) besteht.

6. - Verfahren nach Anspruch 4 oder Anspruch 5, **dadurch gekennzeichnet, dass** die Frequenzverhältnisse der Gesamtheit der Testbilder untereinander Primzahlen sind.

7. - Verfahren nach einem der Ansprüche 1 bis 6, **dadurch gekennzeichnet, dass** das Verfahren ferner nach dem Schritt f) oder gegebenenfalls nach dem Schritt g) einen Quantifizierungsschritt der Beeinträchtigung umfasst, der darin besteht, in jedem Unter-Frequenzband das Signal-Rausch-Verhältnis der Linie/n zu berechnen, die den vorher festgelegten ersten Energiegrenzwert oder gegebenenfalls den vorher festgelegten zweiten Energiegrenzwert überschreitet/überschreiten.

8. - Verfahren nach einem der Ansprüche 1 bis 7, **dadurch gekennzeichnet, dass** das Verfahren ferner nach dem Schritt f) oder gegebenenfalls nach dem Schritt g) einen Qualifizierungsschritt der Beeinträchtigung umfasst, der darin besteht, in jedem Unter-Frequenzband die Frequenzspreizung der Linie/n zu berechnen, die den vorher festgelegten ersten Energiegrenzwert oder gegebenenfalls den vorher festgelegten zweiten Energiegrenzwert überschreitet/überschreiten und in jedem Unter-Frequenzband in Abhängigkeit von der Breite der berechneten Frequenzspreizung zu bestimmen, ob die der oder den Linien, die den vorher festgelegten ersten Energiegrenzwert oder gegebenenfalls den vorher festgelegten zweiten Energiegrenzwert überschreitet/überschreiten, zugeordneten beeinträchtigenden Störsignale wiederhergestellt werden können oder nicht.

9. - Verfahren nach einem der Ansprüche 1 bis 8, **dadurch gekennzeichnet, dass** das Verfahren ferner nach dem Schritt f) oder gegebenenfalls nach dem Schritt g) den Schritt umfasst, der darin besteht, auf einer Benutzerschnittstelle die Mitteilungsergebnisse der beeinträchtigten Informatikeinrichtung (2; 12a, 12b, 12c), die die Linie/n umfassen, die den vorher festgelegten ersten Energiegrenzwert oder gegebenenfalls den vorher festgelegten zweiten Energiegrenzwert in jedem Unter-Frequenzband überschreitet/überschreiten, und gegebenenfalls die Ergebnisse der Quantifizierung und Qualifizierung der Beeinträchtigung anzuzeigen (35).

10. - Informationssystem (1; 10), das mindestens eine Informatikeinrichtung (2; 12a, 12b, 12c) und ferner eine Signalanalysevorrichtung (7; 17) umfasst, die eine Empfangsantenne (8; 18) und ein Rechenmittel (9; 19) umfasst, die ausgelegt sind, um das Verfahren zur Detektion von mindestens einer beeinträchtigten Informatikeinrichtung (2; 12a, 12b, 12c) nach einem der Ansprüche 1 bis 9 durchzuführen.

## Claims

1. - A method for detecting at least one compromised computer device (2; 12a, 12b, 12c) within an information system (1; 10) comprising at least one computer device (2; 12a, 12b, 12c), the method comprising the following steps:
a) performing (30) a frequency scanning consisting in dividing the electromagnetic spectrum into frequency sub-bands;
b) performing (31), in each frequency sub-band, a time envelope demodulation in order to recover signals transmitted by the at least one computer device (2; 12a, 12b, 12c) of the information system (1; 10);
c) converting (32) each demodulated signal in the frequency domain;
d) constructing a frequency spectrum from the demodulated signals in all the frequency sub-bands;
the method being **characterized in that** it further comprises the following steps:
e) finding (33) sequentially, in each frequency sub-band of the frequency spectrum, at least one line having an energy which is greater than a first predefined energy threshold;
f) if at least one line having an energy greater than the first predefined energy threshold is found in at least one frequency sub-band, signaling the presence of at least one compromised computer device (2; 12a, 12b, 12c), in the information system (1; 10), transmitting compromising spurious signals.

2. - The method according to claim 1, **characterized in that** it further comprises, between step c) and step d), step c1) consisting in improving the signal-to-noise ratio through successive integrations of the demodulated signals.

3. - The method according to claim 1 or claim 2, implemented within an information system (10) comprising several computer devices (12a, 12b, 12c), each equipped with a display device (14a, 14b, 14c), **characterized in that** the method further comprises, before step a), the step consisting in sending, to each computer device (12a, 12b, 12c) of the information system (10), a display signal with a frequency specific to the corresponding computer device (12a, 12b, 12c), each display signal having a known frequency ratio relative to a reference frequency, and, after step f), step g) consisting in finding (33) sequentially, in each frequency sub-band of the frequency spectrum, at least one pair of lines having a frequency ratio corresponding to one of the known frequency ratios and one of the lines of which is one of the at least one line with an energy greater than the first predefined energy threshold in the corresponding frequency sub-band, and, when the other of the lines of the at least one pair of lines exceeds a second predefined energy threshold, signaling that the computer device (12a, 12b, 12c) corresponding to said frequency ratio is compromised.

4. - The method according to claim 3, **characterized in that** each display signal is a test card (20a, 20b, 20c) intended to be displayed on the display device (14a, 14b, 14c) of the corresponding computer device (12a, 12b, 12c), said test card (20a, 20b, 20c) comprising a pattern whose frequency is a multiple or submultiple of the reference frequency constituted by a synchronization frequency associated with said test card (20a, 20b, 20c), the frequency ratio between the frequency of the pattern and the synchronization frequency being known and specific to the corresponding computer device (12a, 12b, 12c).

5. - The method according to claim 4, **characterized in that** the reference frequency is constituted by the line synchronization frequency of the display device (14a, 14b, 14c) of the computer device (12a, 12b, 12c).

6. - The method according to claim 4 or claim 5, **characterized in that** said frequency ratios of all the test cards are numbers prime relative to one another.

7. - The method according to one of claims 1 to 6, **characterized in that** the method further comprises, after step f), or if applicable, after step g), a compromise quantification step consisting in calculating, in each frequency sub-band, the signal-to-noise ratio of said line(s) exceeding the first predefined energy threshold or, if applicable, the second predefined energy threshold.

8. - The method according to one of claims 1 to 7, **characterized in that** the method further comprises, after step f) or, if applicable, after step g), a step for qualifying the compromise consisting in calculating, in each frequency sub-band, the frequency spread of said line(s) exceeding the first predefined energy threshold or, if applicable, the second predefined energy threshold, and determining, in each frequency sub-band, as a function of the width of the calculated frequency spread, whether the compromising spurious signals associated with said line(s) exceeding the first predefined energy threshold or, if applicable, the second predefined energy threshold can or cannot be reconstituted.

9. - The method according to one of claims 1 to 8, **characterized in that** the method further comprises, after step f) or, if applicable, after step g), the step consisting in displaying (35), on a user interface, the compromised computer device (2; 12a, 12b, 12c) signaling results comprising the line(s) exceeding the first predefined energy threshold or, if applicable, the second predefined energy threshold in each frequency sub-band and, if applicable, the compromise quantification and qualification results.

10. - An information system (1; 10) comprising at least one computer device (2; 12a, 12b, 12c), and further a signal analysis device (7; 17) comprising a reception antenna (8; 18) and a computing means (9; 19) which are configured to carry out the method for detecting at least one compromised computer device (2; 12a, 12b, 12c) according to one of claims 1 to 9.
